# EUROPEAN PATENT SPECIFICATION

(11) **EP 4 472 017 B1**
(45) Date of publication and mention of the grant of the patent: **25.03.2026**
(21) Application number: 24166466.3
(22) Date of filing: 26.03.2024
(51) Int. Cl.: H02J 7/00, G06F 1/26

(54) **POWER SUPPLY CIRCUIT, ELECTRONIC APPARATUS, AND CONTROL METHOD**
STROMVERSORGUNGSSCHALTUNG, ELEKTRONISCHE VORRICHTUNG UND STEUERUNGSVERFAHREN
CIRCUIT D'ALIMENTATION ÉLECTRIQUE, APPAREIL ÉLECTRONIQUE ET PROCÉDÉ DE COMMANDE

(30) Priority: 30.05.2023 CN 202310623394
(43) Date of publication of application: 04.12.2024
(73) Proprietor: Lenovo (Beijing) Limited, Beijing 100085 (CN)
(72) Inventor: KAWAKAMI, Jumpei, 220-0012 Yokohama-shi (JP); WATANABE, Hiroyuki, 220-0012 Yokohama-shi (JP); NAGATA, Nozomu, 220-0012 Yokohama-shi (JP); TAN, Yue, 100085 Beijing (CN)
(74) Representative: Openshaw & Co.

(56) References cited:
- EP-A1- 1 225 674
- WO-A1-2017/129264
- US-A- 5 596 259

## Description

### BACKGROUND OF THE INVENTION

### Field of the Invention

The present invention relates to a power supply circuit, an electronic apparatus, and a control method related, for example, to battery charging.

### Description of the Related Art

Battery packs may be equipped in information apparatuses, such as PCs (Personal Computers), tablet terminals, smartphones, and other various electronic apparatuses. An electronic apparatus is operable by consuming electric power charged in a battery pack even when no electric power is supplied from outside. In the battery pack, a battery (secondary battery) is charged from an AC (Alternating Current) adapter under the control of a power supply circuit, which is a system charging IC (Integrated Circuit), for example.

For example, a charging method disclosed in Japanese Unexamined Patent Application Publication No. H04-183232 is a charging method for a secondary battery to further charge the secondary battery for a certain period of time after charging of the secondary battery deviates from a predetermined condition in a method for charging the secondary battery by a constant voltage power supply with current limited. The predetermined condition is that the battery voltage of the secondary battery becomes a predetermined voltage or the charging current of the secondary battery becomes a predetermined current.

As charging methods from a system to a battery, there are system non-operating charge (also called system off charge or off charge) and system operating charge (also called system operation charge or on charge). The system non-operating charge is a method for charging only the battery without supplying electric power to the system. The system operating charge is a method for charging the battery as well while supplying electric power to the system. In the system non-operating charge, almost all of supply current Iₜₒₜₐₗ supplied from the AC adapter is charged to the battery. When conditions that a cell voltage generated in the battery becomes a predetermined detection voltage (also called a taper voltage) or more, and a charging current becomes a predetermined detection current (also called a taper current) or less are met, a controller determines that the charged state of the battery has reached a fully charged state, and charging is finished.

EP1225674A1 discloses a charging control unit that, when starting charging of an internal battery as a result of connection of an external power source by an AC adapter, sets a first charging voltage at which the charging capacity of the internal battery is maximized.

WO2017129264A1 discloses a control device for controlling charging of a rechargeable battery, the control device being configured to: determine the voltage of the battery during charging of the battery, stop charging, when the determined voltage exceeds a predetermined upper voltage limit, determine the voltage of the battery after stopping charging, determine the voltage difference between the predetermined upper voltage limit and the determined voltage of the battery after stopping charging, and continue charging, when the determined voltage difference exceeds a predetermined threshold.

US5596259A discloses a charging apparatus that charges a secondary battery while controlling an output voltage of the charging apparatus to maintain the effective charging voltage at a substantially constant predetermined value at which the secondary battery is actually charged.

### SUMMARY OF THE INVENTION

However, in the system operating charge, a required current out of the supplied charging current Iₜₒₜₐₗ is supplied to the system as a system current I_{sys}. A residual current Iₜₒₜₐₗ-I_{sys} after removing, from the supply current Iₜₒₜₐₗ, the system current I_{sys} supplied to the system is supplied to the battery. Therefore, the supplied current may not meet the battery requirements. Especially, when an AC adapter with low-rated power is used, a decrease in charging power to be charged to the battery may become noticeable. Under such circumstances, even when the conditions that the cell voltage becomes the taper voltage or more and the charging current becomes the taper current or less are met, the capacity of electric charge stored in the battery may become smaller than the capacity in the fully charged state (full charge capacity) originally expected.

As a cause, it is considered that a voltage lower by a given margin than the rated value of a system voltage supplied from the system is set as the taper voltage. When a full charge determination is made by relying on the fixed taper voltage due to the fact that the charging current becomes the taper current or less, the charge capacity stored in the battery may be lower than the full charge capacity. The taper voltage depends on circuit resistance values of the battery and the system, but these circuit resistance values vary individually. In order to ensure safety or stability, a larger margin than necessary tends to be set on each individual equipment by taking individual differences into account at the design stage.

The present application has been made to solve the above problem, and a power supply circuit according to a first aspect of the present application is provided according to claim 1.

The above power supply circuit is such that, when charging the battery with the charging power without supplying the system power to the system, the cell voltage at the time when determining that the charged state is fully charged is determined to be the second detection voltage.

The above power supply circuit is such that, when a charging method for the battery is changed from a first charging mode for charging with a constant charging current to a second charging mode for charging with a constant charging voltage, a circuit resistance value from the power supply circuit to the battery is measured based on a charging voltage to the battery, the cell voltage, and the charging current, and a voltage dropped from the charging voltage due to the circuit resistance value and the detection current is determined to be the second detection voltage.

The above power supply circuit is such that, when determining that the charged state is not fully charged even after the charging time to the battery exceeds a predetermined reference charging time, the predetermined detection voltage is changed to the first detection voltage.

Further, the above power supply circuit may include the battery.

An electronic apparatus according to a second aspect of the present application may include the above power supply circuit.

A control method according to a third aspect of the present application is provided according to claim 4.

The embodiment according to the above-described aspects of the present application can finish charging more accurately in the fully charged state even when electric power is consumed in the system.

### BRIEF DESCRIPTION OF THE DRAWINGS

FIG. 1 is a schematic block diagram illustrating a hardware configuration example of an electronic apparatus according to an embodiment.
FIG. 2 is a schematic block diagram illustrating a circuit layout example according to the present embodiment.
FIG. 3 is a graph illustrating a first example of the time lapse of a cell voltage and a charging current upon charging.
FIG. 4 is a graph illustrating a second example of the time lapse of the cell voltage and the charging current upon charging.
FIG. 5 is a flowchart illustrating charging control processing according to the present embodiment.
FIG. 6 is a flowchart illustrating a first example of detection voltage setting processing according to the present embodiment.
FIG. 7 is a flowchart illustrating a second example of detection voltage setting processing according to the present embodiment.

### DETAILED DESCRIPTION OF THE INVENTION

An embodiment of the present application will be described with reference to the accompanying drawings. First, the overview of an electronic apparatus 1 according to the embodiment of the present application will be described. The electronic apparatus 1 includes a power supply circuit 33. The power supply circuit 33 supplies, to a system, system power required for the system out of DC power supplied from a DC power supply, and charges a battery with the remaining charging power. When a cell voltage of the battery is a predetermined taper voltage or more and a charging current of the charging power becomes a predetermined detection current or less, the power supply circuit 33 determines that the battery charged state is fully charged. In the present embodiment, the taper voltage is set to a variable value rather than a fixed value. Here, when battery charging conditions meet specific charging conditions, the power supply circuit 33 estimates, as a second taper voltage, the taper voltage when fully charged based on the cell voltage. The power supply circuit 33 updates the predetermined taper voltage from a predetermined first taper voltage to the second taper voltage.

The electronic apparatus 1 according to the present embodiment can be an electronic apparatus typically having a convenient size and weight to carry and consuming electric power stored in the battery. The electronic apparatus 1 may be any form of information apparatus such as a PC, a smartphone, or a tablet terminal. The electronic apparatus 1 may also be an apparatus, such as a measuring instrument or a monitoring device, installed in an environment difficult to supply electric power constantly from a DC power supply. The following description is mainly made when the electronic apparatus 1 is a personal computer (PC). Further, the "system" in the present application may indicate a device, that is, a load, that consumes electric power supplied from the power supply circuit 33 in the electronic apparatus 1. When the electronic apparatus 1 is an information apparatus, power consumption in the computer system (also called a host system) usually accounts for most of processing of the electronic apparatus 1.

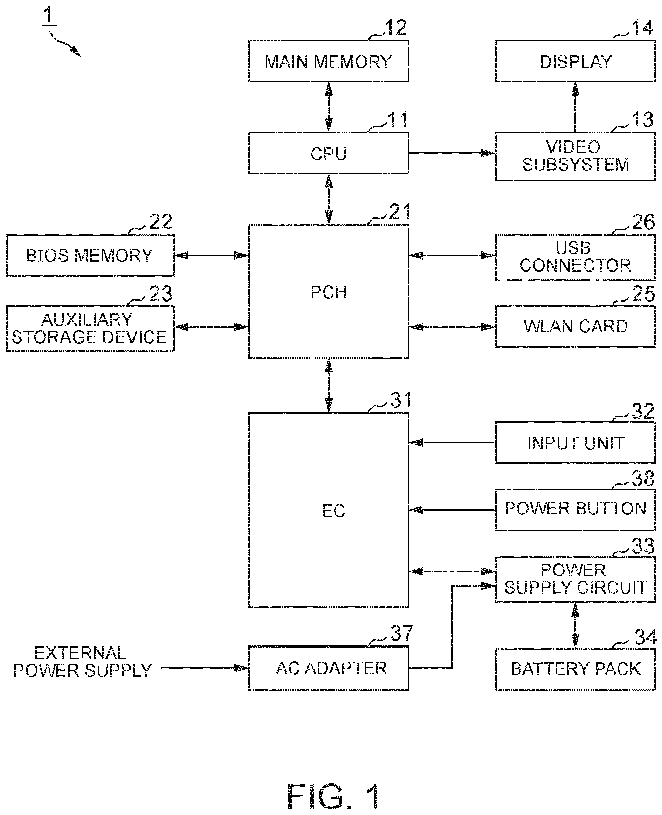

FIG. 1 is a schematic block diagram illustrating a hardware configuration example of the electronic apparatus 1 according to the present embodiment. The electronic apparatus 1 includes a CPU 11, a main memory 12, a video subsystem 13, a display 14, a PCH (Platform Controller Hub) 21, a BIOS (Basic Input Output System) memory 22, an auxiliary storage device 23, a WLAN (Wireless Local Area Network) card 25, a USB (Universal Serial Bus) connector 26, an EC (Embedded Controller) 31, an input unit 32, the power supply circuit 33, a battery pack 34, and a power button 38.

The CPU 11 is a processor that forms the core of a system device included in the electronic apparatus 1. The CPU 11 is a processor that executes various kinds of arithmetic processing directed by commands written in software (programs). For example, the CPU 11 executes processing instructed by various kinds of software such as an OS (Operating System), a BIOS, and application programs (called "apps" or "applications" in the present application). Note that the fact that the processing directed by commands written in software is executed may also be referred to as that "software is executed."

The main memory 12 is a writable memory used as reading areas of execution programs of the processor or working areas to which processing data of the execution programs are written. The main memory 12 is composed, for example, of plural DRAM (Dynamic Random Access Memory) chips. The execution programs include the OS, various drivers for operating hardware such as peripheral devices, various services/utilities, apps, and the like.

The CPU 11 and the main memory 12 function as a computer system that forms the core of the electronic apparatus 1, that is, a system device that forms a host system. The computer system of the electronic apparatus 1 is configured to include system devices as hardware, the OS, and software such as Schedule Task and the like.

The video subsystem 13 executes image processing under the control of the CPU 11. The video subsystem 13 includes a video controller and a video memory (not illustrated). The video controller performs image processing according to drawing commands input from the CPU 11 to generate drawing information and to write the generated drawing information to the video memory (not illustrated). The video controller reads the drawing information from the video memory, and outputs, to the display 14, display data indicative of the read drawing information (image processing).

On the other hand, the CPU 11 executes a graphics driver on the OS to control the operation of the video subsystem 13. The CPU 11 outputs, to the video subsystem 13, the drawing commands by the OS, the apps, or other programs to realize the image processing.

The display 14 displays a display screen based on the display data output from the CPU 11. The display 14 may be any one of a liquid crystal display (LCD), an OLED (Organic Light Emitting Diode) display, and the like.

The PCH 21 includes one or more controllers to enable connection to plural devices so that various data can be input and output. For example, the PCH 21 is any one or a combination of bus controllers, such as USB, serial ATA (Advanced Technology Attachment), an SPI (Serial Peripheral Interface) bus, a PCI (Peripheral Component Interconnect) bus, a PCI-Express bus, and an LPC (Low Pin Count) bus. The plural devices as connection destinations correspond, for example, to the BIOS memory 22, the auxiliary storage device 23, the WLAN card 25, the USB connector 26, and the EC 31.

The BIOS memory 22 is configured as an electrically rewritable non-volatile memory. Such a non-volatile memory corresponds, for example, to an EEPROM (Electrically Erasable Programmable Read Only Memory), a flash ROM (Read Only Memory), or the like. The BIOS memory 22 stores a BIOS, firmware for controlling the operation of the EC 31 and other devices, and the like. The BIOS is firmware for basic input and output of the system devices. In the present application, firmware defined according to the specifications stipulated in the UEFI (Unified Extensible Firmware Interface) can be included in the BIOS concept.

The auxiliary storage device 23 sustainably stores various data. Data to be stored include various programs executable by the CPU 11 and other devices, parameters, data used in various processing, and data acquired by the various processing. For example, the auxiliary storage device 23 may be either one of an HDD (Hard Disk Drive) and an SSD (Solid State Drive). The auxiliary storage device 23 is configured to include various non-volatile memories. As a non-volatile memory, for example, a flash memory is used. The various programs can include, for example, any one or a combination of the OS, drivers, firmware, apps, and the like.

The WLAN card 25 is connected to a wireless LAN or any other network via the wireless LAN so that various data can be transmitted and received with devices as connection destinations.

The USB connector 26 is a connector for connecting various peripheral devices using USB.

The EC 31 is a one-chip microcomputer that monitors and controls the status of various devices (peripheral devices, sensors, and the like) regardless of the operating state of the host system that forms the core of the electronic apparatus 1. The EC 31 includes a ROM, multichannel A/D (Analog-to-Digital) input terminal and D/A (Digital-to-Analog) output terminal, a timer, and digital input/output terminals (not illustrated) in addition to a CPU separate from the CPU 11 and a RAM separate from the main memory 12. The input unit 32, the power supply circuit 33, and the like are connected to the digital input/output terminals of the EC 31 so that the EC 31 can control the operation of these devices.

The EC 31 monitors the operating state of each of the devices that construct the electronic apparatus 1, and determines electric energy required for the operation to exceed the power consumption of each device (which may also be called "device power" in the present application). The total of device power corresponds to system power. The devices to be monitored include system devices of the electronic apparatus 1, mainly including the CPU 11. The EC 31 outputs, to the power supply circuit 33, a system power request indicative of the device power for each device. As will be described later, electric power corresponding to the device power is supplied from the power supply circuit 33 to each of the devices that construct the system.

The input unit 32 includes input devices that detect user operations and output, to the EC 31, operation signals according to the detected operations. For example, the input devices included in the input unit 32 correspond to a keyboard, a touch pad, and the like. A touch sensor that constructs part of the input unit 32 may be configured as a touch panel which overlaps with the display 14 that constructs a display unit.

DC power is supplied from an AC (Alternating Current) adapter 37 to the power supply circuit 33. Under the control of the EC 31, the power supply circuit 33 supplies, to the system, system power required for the system out of the supplied DC power. The power supply circuit 33 supplies, to each device, electric power corresponding to the device power directed by the system power request for the device notified from the EC 31. The power supply circuit 33 supplies electric power corresponding to the system power as the entire system of the electronic apparatus 1. The power supply circuit 33 charges the battery pack 34 with the remaining power as charging power after removing the system power out of the supplied DC power.

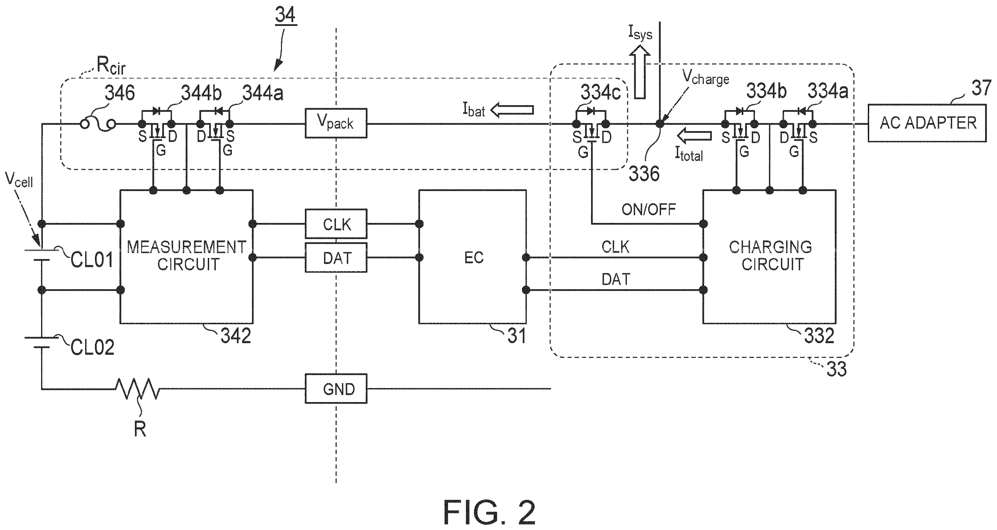

The power supply circuit 33 includes a charging circuit 332 (FIG. 2) and a converter (not illustrated). The charging circuit 332 charges the battery pack 34 with the charging power depending on the charged state in the battery pack 34. When the cell voltage of the battery pack 34 is a predetermined taper voltage or more and the charging current of the charging power becomes a predetermined taper current or less, the charging circuit 332 determines that the charged state of the battery pack 34 is fully charged. In the present application, the determination of whether or not the charged state has reached a fully charged state or the determination result may also be called the "full charge determination." When the full charge determination is made, the charging circuit 332 stops charging to the battery pack 34.

The converter converts the voltage of electric power supplied from the AC adapter 37 to the own apparatus into a voltage required for each device. The converter supplies electric power with the converted voltage to the device for which the electric power with the converted voltage is required.

The battery pack 34 includes one or more batteries (also called secondary batteries, cells, or the like), and a measurement circuit 342 (not illustrated). The measurement circuit 342 measures a charging voltage and a charging current as the battery charged state, and notifies the power supply circuit 33 of charged state information indicative of the measured charging voltage and charging current. In the battery (or the batteries), charging power supplied from the power supply circuit 33 is stored.

The AC adapter 37 converts AC power supplied from an external power supply into DC power with a constant voltage, and supplies the converted power to the power supply circuit 33. The AC adapter 37 is connected to the power supply circuit 33 in a manner to enable input/output of control signals. The AC adapter 37 includes an attachment attachable to and detachable from the chassis of the electronic apparatus 1 including the power supply circuit 33. The AC adapter 37 may also be connected to the USB connector 26 in a physically attachable/detachable manner.

The power button 38 controls whether or not there is the supply of electric power to the entire electronic apparatus 1 (Power ON/OFF) each time a press operation is accepted. The power button 38 outputs, to the EC 31, a press signal indicative of a press. When the press signal is input from the power button 38 while the electronic apparatus 1 is in a power cut-off state (in a state without power supply), the EC 31 causes the power supply circuit 33 to start the supply of electric power to each device of the electronic apparatus 1 (power on). When the press signal is input from the power button 38 while the electronic apparatus 1 is being energized (with power supply), the EC 31 causes the power supply circuit 33 to stop the supply of electric power to each device of the electronic apparatus 1 (power cut-off).

Next, a circuit layout example according to the present embodiment will be described. FIG. 2 is a schematic block diagram illustrating the circuit layout example according to the present embodiment.

The power supply circuit 33 includes the charging circuit 332 and FETs 334a, 334b, and 334c. The battery pack 34 includes the measurement circuit 342, FETs 344a and 344b, a fuse 346, and cells CL01 and CL02.

A power line is electrically connected to the positive electrode of the cell CL01 from the AC adapter 37 via the FETs 334a, 334b, 334c, 344a, 344b, and the fuse 346. The cells CL01 and CL02 are connected in series. The negative electrode of the cell CL02 is grounded (GND) through a resistance element R. This can result in avoiding or reducing the damage to the cells CL0 and CL02 due to reverse connection of the cells CL01 and CL02, or an unexpected voltage application to the negative electrode.

The FET (Field Effect Transistor) 334a prevents a reverse current flow from a branch point 336 to the AC adapter 37. The FET 334b adjusts the current from the AC adapter 37 to the branch point 336 under the control of the charging circuit 332. The FET 334c switches whether or not there is conduction between the branch point 336 and the battery pack 34 under the control of the charging circuit 332. The FET 344a controls the current discharged from the cells CL01 and CL02 under the control of the measurement circuit 342. The FET 344b controls the current charged to the cells CL01 and CL02 under the control of the measurement circuit 342.

The source electrode (which may also be called the "S electrode" below), the drain electrode (which may also be called the "D electrode" below), and the gate electrode (which may also be called the "G electrode" below) of the FET 334a are electrically connected to the AC adapter 37, the D electrode of the FET 334b, and the charging circuit 332, respectively. The FET 334a can prevent a reverse current flow from the FET 334b to the AC adapter 37 by keeping the voltage applied to the G electrode from becoming significantly higher than 0 V.

The S electrode, the D electrode, and the G electrode of the FET 334b are electrically connected to the branch point 336, the D electrode of the FET 334a, and the charging circuit 332, respectively. By increasing the positive potential applied to the G electrode of the FET 334b, the current flowing from the AC adapter 37 can be increased.

The S electrode, the D electrode, and the G electrode of the FET 334c are electrically connected to the battery pack 34, the branch point 336, and the charging circuit 332, respectively. By applying an open/close control signal from the charging circuit 332 to the G electrode of the FET 334c, it is controlled whether or not there is conduction from the branch point 336 to the battery pack 34 (ON/OFF). The open/close control signal is a binary signal that can take two levels of potential. Between the two levels of potential, the lower level is called a low potential (L) and the higher level is called a high potential (H). The low potential is, for example, a potential within a predetermined range from 0 V. The high potential is a positive potential significantly higher than the low potential. When the battery pack 34 is charged, the charging circuit 332 applies the open/close control signal having the high potential to the G electrode of the FET 334c, while when the battery pack 34 is not charged, the charging circuit 332 stops the application of the open/close control signal having the high potential to the G electrode of the FET 334c.

The branch point 336 supplies, to the system, system power as part of the DC power supplied from the AC adapter 37, and supplies the remaining charging power to the battery pack 34 via the FET 334c. The total current value Iₜₒₜₐₗ of the supplied DC power corresponds to the sum of a system current I_{sys} as a current value of the system power and a charging current I_{bat} as a current value of the charging power.

The S electrode, the D electrode, and the G electrode of the FET 344a are electrically connected to the power supply circuit 33, the D electrode of the FET 344b, and the measurement circuit 342, respectively. By increasing the positive potential applied to the G electrode of the FET 344a, the power current discharged from the cell CL01 can be increased.

The S electrode, the D electrode, and the G electrode of the FET 344b are electrically connected to the fuse 346, the D electrode of the FET 344a, and the measurement circuit 342, respectively. By increasing the positive potential applied to the G electrode of the FET 344b, the power current charged from the power supply circuit 33 to the cells CL01 and CL02 can be increased.

The S electrode, the D electrode, and the G electrode of the FET 334b are electrically connected to the branch point 336, the D electrode of the FET 334a, and the charging circuit 332, respectively. By increasing the positive potential applied to the G electrode of the FET 334b, the current flowing from the AC adapter 37 can be increased.

When a current exceeding a predetermined limit value is detected, the fuse 346 cuts off the current flowing therethrough. Thus, an excessive current flowing into or out of the cells CL01 and CL02 can be prevented.

The charging circuit 332 and the measurement circuit 342 are connected to the EC 31 using signal lines, respectively. The signal lines include a data signal line (DAT) and a clock signal line (CLK). The data signal line is used to transmit a control signal and other data. The clock signal line is used to transmit a clock signal. The charging circuit 332 and the measurement circuit 342 synchronize with the EC 31 using the clock signal input from the EC 31, respectively. As the signal line, for example, a system management bus (SMB) is used.

The charged state information is input from the measurement circuit 342 to the charging circuit 332 via the EC 31. The charging circuit 332 controls charging to the battery pack 34 based on the charged state indicated by the charged state information. The charging circuit 332 realizes constant current (CC) charging and constant voltage (CV) charging as main charging methods. The CC charging means a charging mode for charging with a preset constant charging current value. According to the CC charging, since charging with a relatively large current is enabled, an electromotive force increases and the resistance decreases as the cell charge is accumulated in the battery pack 34. The CC charging may be performed at such a stage that the charging voltage V_{charge} for charging the battery pack 34 does not reach a constant charging voltage value.

The CV charging means a charging mode for charging with a preset constant charging voltage. The CV charging is started at the time when the charging voltage V_{charge} has reached a predetermined charging voltage V_{charge,CV}, and the charging voltage V_{charge} is maintained at the constant value V_{Charge,CV} after that. At this stage, the cell voltage V_{cell} inside the battery pack 34 tends to be lower than the charging voltage V_{charge}. According to the CV charging, the cell voltage V_{cell} inside the battery pack 34 gets close to the charging voltage V_{charge} and the charging current decreases. The full charge determination can be made during the CV charging.

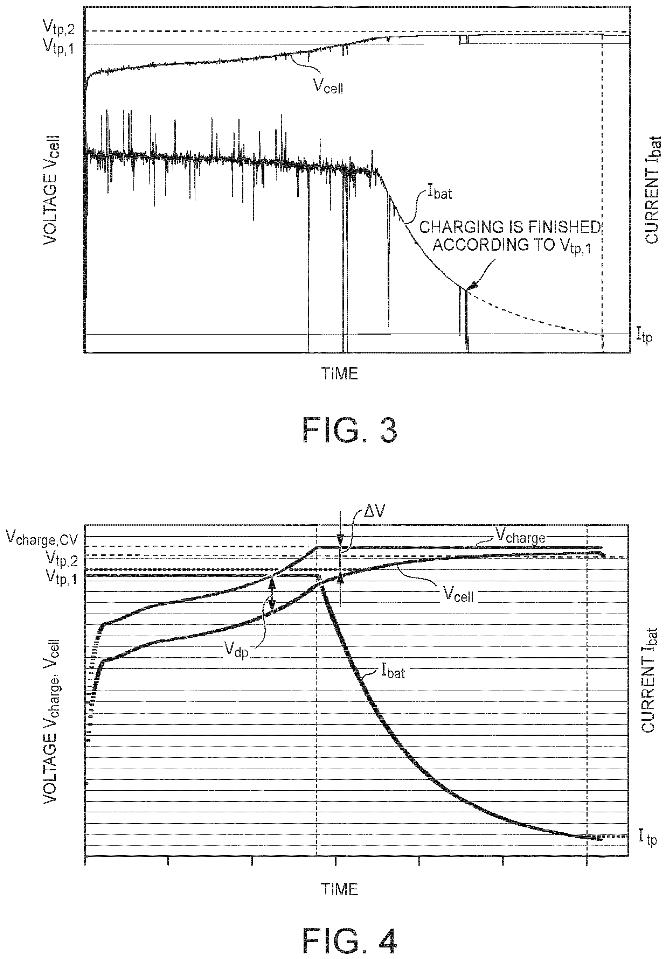

When the cell voltage V_{cell} of the battery pack 34 is the predetermined taper voltage or more and the charging current I_{bat} of the charging power becomes a predetermined taper current Iₜₚ or less, the charging circuit 332 makes the full charge determination. When making the full charge determination, the charging circuit 332 stops charging the battery pack 34. As an initial value of the predetermined taper voltage, a first taper voltage V_{tp,1} is preset in the charging circuit 332. In the example of FIG. 4, for example, a voltage design value lower by a predetermined minute margin voltage ΔV (for example, by 50 to 200 mV) than the charging voltage V_{Charge,CV} in the fully charged state can be used as the first taper voltage V_{tp,1}.

In the case where the charging conditions to the battery pack 34 meet the specific charging conditions, the charging circuit 332 estimates the taper voltage when fully charged as a second taper voltage V_{tp,2} based on the cell voltage V_{cell} of the battery pack 34 at the time. The power supply circuit 33 updates the predetermined taper voltage used for the full charge determination from the first taper voltage V_{tp,1} to the estimated second taper voltage V_{tp,2}. When the charged state of the battery pack 34 is not fully charged even after the total charging time of the battery pack 34 exceeds a predetermined reference charging time (for example, 8 to 20 hours), the power supply circuit 33 changes the predetermined taper voltage from the second taper voltage V_{tp,2} to the first taper voltage V_{tp,1}. The estimation method of the second taper voltage V_{tp,2} will be described later. The charging circuit 332 is, for example, a system charger IC.

The measurement circuit 342 is a circuit for measuring the charged state to the cells CL01 and CL02. The measurement circuit 342 measures the potential at the positive electrode of the cell CL01 as the cell voltage V_{cell}, and measures the current flowing from the power supply circuit 33 as the charging current I_{bat}. The measurement circuit 342 outputs charged state information indicative of the measured cell voltage V_{cell} and charging current I_{bat} to the charging circuit 332 via the EC 31. The charging circuit 332 controls charging based on the charged state indicated by the charged state information input from the measurement circuit 342.

The measurement circuit 342 adjusts the potentials applied to the respective G electrodes of the FET 344a and the FET 344b to control discharging from the cell CL01 and charging to the cell CL02, respectively. The measurement circuit 342 is, for example, a battery fuel gauge IC (Integrated Circuit). When no electric power is supplied from the AC adapter 37, the EC 31 notifies the measurement circuit 342 of the system current I_{sys} to discharge a current corresponding to the system current I_{sys} from the cells CL01 and CL02.

Next, the estimation method of the second taper voltage V_{tp,2} will be described. A first example of the estimation method is a method for determining the cell voltage V_{cell} when full charge is detected in off charge to be the second taper voltage V_{tp,2}. On the ground that the system power is zero or that the system power is unnecessary by the system power request notified from the EC 31, the charging circuit 332 can determine that the charging method is the system non-operating charge, that is, that charging is in a state where no electric power is supplied to the system. The cell voltage V_{cell} is notified from the measurement circuit 342 to the charging circuit 332 via the EC 31. The charging circuit 332 makes the full charge determination using the newly determined second taper voltage V_{tp,2} instead of the first taper voltage V_{tp,1}.

In the example of FIG. 3, in off charge at a stage where the battery does not reach the fully charged state even after the cell voltage V_{cell} exceeds the first taper voltage V_{t3,1}, the charging current I_{bat} decreases over time in a state of exceeding the taper current Iₜₚ. Therefore, the full charge determination is not made immediately. In on charge, the charging current I_{bat} decreases and may be temporarily below the taper current Iₜₚ due to power consumption in the system. When the first taper voltage V_{tp,1} is used in the full charge determination, the state of the cells CL01 and CL02 is erroneously determined to be the fully charged state despite the fact that the cells CL01 and CL02 do not reach the fully charged state.

However, by using the second taper voltage V_{tp,2} as the taper voltage, since the cell voltage V_{cell} does not reach the second taper voltage V_{tp,2} even when the charging current I_{bat} is temporarily below the taper current Iₜₚ, the full charge determination is not made immediately. Thus, since the second taper voltage V_{tp,2} detected at the off-charge time can be compared with the cell voltage V_{cell}, the full charge determination can be made correctly. Further, individual differences can be resolved by adopting the actually detected cell voltage V_{cell} as the second taper voltage V_{tp,2}.

A second example of the estimation method is a method in which, when the charging mode is changed from CC charging to CV charging, a voltage dropped from the constant charging voltage V_{Charge,CV} due to a voltage drop V_{dp} based on the circuit resistance in a path from the power supply circuit 33 to the cell CL01 and the predetermined taper current Iₜₚ is determined to be the second taper voltage V_{tp,2}. In the example of FIG. 4, the charging mode is changed from CC charging to CV charging when the charging voltage V_{charge} reaches the predetermined constant charging voltage V_{Charge,CV} related to CV charging. The EC 31 measures the voltage at the branch point 336 as the charging voltage V_{charge}. When determining that the charging voltage V_{charge} has reached the constant charging voltage V_{charge,CV}, the EC 31 notifies the charging circuit 332 of a charging mode changing instruction from CC charging to CV charging. When the charging mode changing instruction is input from the EC 31, the charging circuit 332 changes the charging mode from CC charging to CV charging. The charging circuit 332 can calculate a circuit resistance R_{cir} by dividing the voltage drop V_{dp} (= V_{charge,CV} - V_{cell}) from the charging voltage V_{Charge,CV} to the cell voltage V_{cell} at this time by the charging current I_{bat}. In the example of FIG. 2, the circuit resistance R_{cir} in a path from the branch point 336 to the positive electrode of the cell CL01 is caused by the FETs 334c, 344a, 344b, and the fuse 346. The charging circuit 332 can determine the second taper voltage V_{tp,2} by subtracting, from the charging voltage V_{charge,CV}, a voltage drop R_{cir}×Iₜₚ due to the taper current Iₜₚ in the circuit resistance R_{cir}.

Next, an example of charging control processing according to the present embodiment will be described.

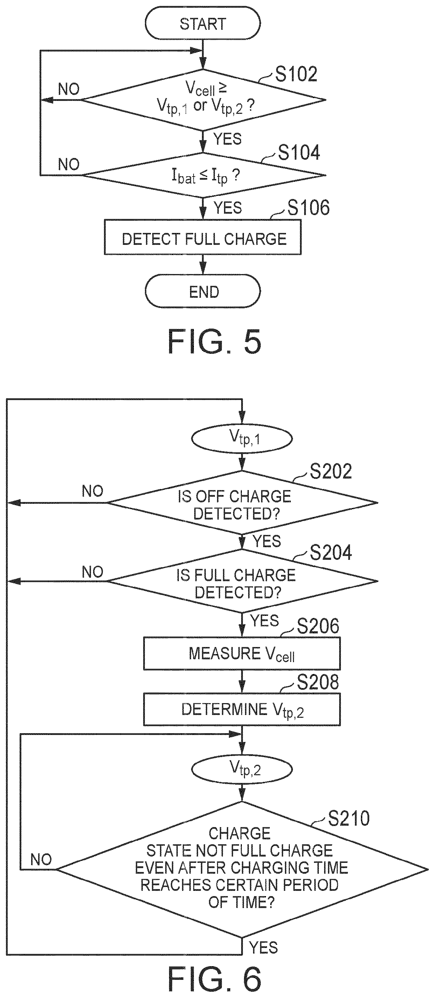

FIG. 5 is a flowchart illustrating charging control processing according to the present embodiment.

The processing in FIG. 5 is executed during charging to the battery pack 34.

(Step S102) The charging circuit 332 monitors the cell voltage V_{cell} notified from the measurement circuit 342 to determine whether or not the cell voltage V_{cell} becomes the taper voltage Vₜₚ or more set at the time. In the present embodiment, the taper voltage Vₜₚ can be either one of the first taper voltage V_{tp,1} and the second taper voltage V_{tp,2}. When determining that the cell voltage V_{cell} is the taper voltage Vₜₚ, or more (step S102: YES), the charging circuit 332 proceeds to a process in step S104. When determining that the cell voltage V_{cell} is less than the taper voltage Vₜₚ (step S102: NO), the charging circuit 332 repeats the process in step S102.

(Step S104) The charging circuit 332 determines whether or not the charging current I_{bat} becomes the predetermined taper current Iₜₚ or less. When determining that the charging current I_{bat} is the taper current Iₜₚ or less (step S104: YES), the charging circuit 332 proceeds to a process in step S106. When determining that the charging current I_{bat} exceeds the taper current Iₜₚ (step S104: NO), the charging circuit 332 returns to the process in step S102.

(Step S106) The charging circuit 332 determines that the charged state of the battery pack 34 is the fully charged state, and stops charging to the battery pack 34. At this time, the charging circuit 332 stops the application of the open/close control signal having the high potential (H) to the G electrode of the FET 334c to cut off the charging power. After that, the processing in FIG. 5 is ended.

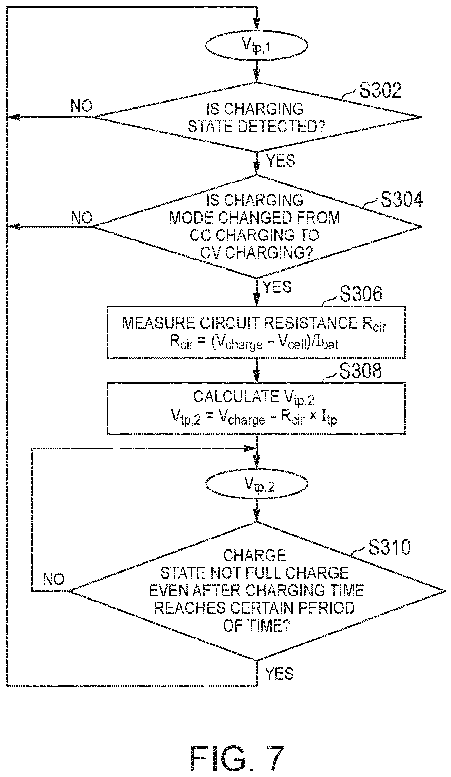

Next, examples of taper voltage setting processing according to the present embodiment will be described. Processing in FIG. 6 and FIG. 7 takes, as an example, a case where the first taper voltage V_{tp,1} is preset in the charging circuit 332 as the initial value of the taper voltage Vₜₚ.

FIG. 6 is a flowchart illustrating a first example of taper voltage setting processing according to the present embodiment.

(Step S202) The charging circuit 332 determines whether or not the charging state at the time is off charge. For example, when the charging current I_{bat} from the branch point 336 toward the battery pack 34 is a positive value significantly larger than 0 A and no system power is required by the system power request notified from the EC 31, the charging circuit 332 determines off charge, or otherwise, the charging circuit 332 can determine that the charging state is not off charge. When determining off charge (step S202: YES), the charging circuit 332 proceeds to a process in step S204. When determining that the charging state is not off charge (step S202: NO), the charging circuit 332 repeats the process in step S202 without changing the taper voltage.

(Step S204) The charging circuit 332 makes the full charge determination using the first taper voltage V_{tp,1} and the preset taper current Iₜₚ (FIG. 5). When determining that the charged state of the battery pack 34 is the fully charged state (step S204: YES), the procedure proceeds to a process in step S206. When determining that the charged state does not reach the fully charged state (step S204: NO), the charging circuit 332 returns to the process in step S202 without changing the taper voltage.

(Step S206) The measurement circuit 342 measures the cell voltage V_{ce11} and notifies the charging circuit 332 of the measured cell voltage V_{cell}.

(Step S208) The charging circuit 332 determines the cell voltage V_{cell} notified from the measurement circuit 342 to be the second taper voltage V_{tp,2}, and changes the taper voltage Vₜₚ used for the full charge determination from the first taper voltage V_{tp,1} to the second taper voltage V_{tp,2}.

(Step S210) The charging circuit 332 determines whether or not the charged state reaches the fully charged state within a certain period of time from the start of charging. When determining that the charged state does not reach the fully charged state even after the certain period of time has passed (step S210: NO), the charging circuit 332 changes the taper voltage Vₜₚ to the first taper voltage V_{tp,1}, and returns to the process in step S202. When determining that the charged state reaches the fully charged state (step S210: YES), the charging circuit 332 repeats the process in step S210 without changing the second taper voltage V_{tp,2}.

FIG. 7 is a flowchart illustrating a second example of taper voltage setting processing according to the present embodiment.

(Step S302) The charging circuit 332 determines whether or not the charging state at the time is on charge. For example, when the charging current I_{bat} from the branch point 336 toward the battery pack 34 is a positive value significantly larger than 0 A, the charging circuit 332 determines on charge, or otherwise, the charging circuit 332 can determine that the charging state is not on charge. When determining on charge (step S302: YES), the charging circuit 332 proceeds to a process in step S304. When determining that the charging state is not on charge (step S302: NO), the charging circuit 332 repeats the process in step S302 without changing the first taper voltage V_{tp,1}.

(Step S304) The charging circuit 332 monitors whether or not the charging mode changing instruction is input from the EC 31 to determine whether or not the charging mode is changed from CC charging to CV charging. When determining that the charging mode is changed to the CV charging (step S304: YES), the charging circuit 332 proceeds to a process in step S306. When determining that the charging mode is not changed to CV charging (step S304: NO), the charging circuit 332 returns to the process in step S302 without changing the first taper voltage V_{tp,1}.

(Step S306) The charging circuit 332 calculates the circuit resistance R_{cir} from a potential difference between the charging voltage V_{charge} and the cell voltage V_{cell} at the time, and the charging current I_{bat}. Here, the measurement circuit 342 measures the cell voltage V_{cell} and notifies the charging circuit 332 of the measured cell voltage V_{cell}. The charging circuit 332 measures the charging voltage V_{charge} and the charging current I_{bat}.

(Step S308) The charging circuit 332 calculates the second taper voltage V_{tp,2} by subtracting, from the charging voltage V_{charge}, the voltage drop R_{cir}×Iₜₚ by the taper current Iₜₚ based on the circuit resistance R_{cir}, and changes the taper voltage Vₜₚ used for the full charge determination from the first taper voltage V_{tp,1} to the second taper voltage V_{tp,2}.

(Step S310) The charging circuit 332 determines whether or not the charged state reaches the fully charged state within the certain period of time. When determining that the charged state does not reach the fully charged state even after the certain period of time has passed (step S310: NO), the charging circuit 332 changes the taper voltage Vₜₚ to the first taper voltage Vt_{p,1}, and returns to the process in step S302. When determining that the charged state reaches the fully charged state (step S310: YES), the charging circuit 332 repeats the process in step S310 without changing the second taper voltage V_{tp,2}.

As described above, the power supply circuit 33 according to the present embodiment supplies, to the system, system power required for the system out of DC power supplied from the power supply, and charges a battery (for example, the battery pack 34) with charging power as the remaining power, and when the cell voltage of the battery is a predetermined detection voltage (that is, the taper voltage) or more and a charging current of the charging power becomes a predetermined detection current (that is, the taper current) or less, the power supply circuit 33 determines that the battery charged state is fully charged. The power supply circuit 33 estimates, as a second detection voltage (for example, the second taper voltage), a cell voltage at the time when determining that the charged state is full charge based on the cell voltage obtained under a specific charging condition to the battery, and updates the predetermined detection voltage from a predetermined first detection voltage (for example, the first taper voltage) to the second detection voltage.

With this configuration, the cell voltage when fully charged, which is estimated based on the cell voltage of the battery that meets the specific charging condition, is determined to be the detection voltage used for determining that the battery charged state has reached full charge. Therefore, even when the charging current temporarily drops due to power consumption in the system, if the measured cell voltage does not reach the cell voltage when fully charged, erroneous determination that the battery charged state is full charge can be avoided. Therefore, charging to the battery can continue more securely until the battery charged state reaches the fully charged state. Further, since the second detection voltage is estimated from the cell voltage based on the actually detected charging condition, a fully charged state adapted to individual electrical characteristics can be detected regardless of individual differences.

When charging the battery with the charging power without supplying the system power to the system, the cell voltage at the time when determining that the charged state is full charge may be determined to be the second detection voltage.

With this configuration, the fully charged state is detected by avoiding a temporary charging current due to power consumption in the system, and the cell voltage at the time is used as the second detection voltage for determining the fully charged state. Therefore, even when the charging current temporarily drops, if the cell voltage does not exceed the second detection voltage, erroneous detection of the fully charged state can be avoided.

When a charging method for the battery is changed from a first charging mode for charging with a constant charging current (CC charging) to a second charging mode for charging with a constant charging voltage (CV charging), the power supply circuit may measure a circuit resistance value from the power supply circuit to the battery based on the charging voltage to the battery, the cell voltage, and the charging current, and determine a voltage dropped from the charging voltage due to the circuit resistance value and the detection current to be the second detection voltage.

With this configuration, not only the voltage drop in the fully charged state is estimated, but also the cell voltage is estimated as the second detection voltage based on the circuit resistance value determined by the voltage drop from the charging voltage to the cell voltage when the charging mode is changed, and the charging current. Therefore, even when the charging current temporarily drops, if the cell voltage does not exceed the second detection voltage, erroneous detection of the fully charged state can be avoided.

When determining that the charged state is not full charge even after the charging time to the battery exceeds a predetermined reference charging time, the power supply circuit may change the predetermined detection voltage to the first detection voltage.

With this configuration, when the fully charged state is not detected using the second detection voltage over a long charging period of time, the second detection voltage is released, and the first detection voltage is used for the full charge determination. Therefore, the second detection voltage with which full charge cannot be detected even when the charged state reaches the fully charged state can be eliminated.

Note that the power supply circuit 33 may also include the battery pack 34 in a manner to be integrally constructed as a single power supply circuit 33. The number of cells included in the battery pack 34 is not limited to two, which may be one, or three or more. When the battery pack 34 includes two or more cells, some or all of these cells may also be connected in parallel.

While the embodiment of this invention has been described in detail with reference to the accompanying drawings, the specific configurations are not limited to those in the embodiment described above, and design changes are also included without departing from the scope of this invention. The respective components in the above-described embodiment can be combined arbitrarily. Description of Symbols

- 1: electronic apparatus
- 11: CPU
- 12: main memory
- 13: video subsystem
- 14: display
- 21: PCH
- 22: BIOS memory
- 23: auxiliary storage device
- 25: WLAN card
- 26: USB connector
- 31: EC
- 32: input unit
- 33: power supply circuit
- 34: battery pack
- 37: AC adapter
- 38: power button
- 332: charging circuit
- 334a, 334b, 334c: FET
- 342: measurement circuit
- 344a, 344b: FET
- 346: fuse
- CL01, CL02: cell
- R: resistance element

## Claims

1. A power supply circuit (33) arranged to:
supply, to a system, system power required for the system out of DC power supplied from a power supply;
charge a battery (34) with charging power as remaining power;
determine that a charged state of the battery is fully charged when a cell voltage of the battery is a predetermined detection voltage or more and a charging current of the charging power becomes a predetermined detection current or less;
estimate, as a second detection voltage, the cell voltage at a time when it is determined that the charged state is fully charged based on the cell voltage obtained in a specific charging state to the battery; and
update the predetermined detection voltage from a predetermined first detection voltage to the second detection voltage; and
determine the cell voltage at the time when determining that the charged state is fully charged to be the second detection voltage when charging the battery with the charging power without supplying the system power to the system,
wherein, when a charging method for the battery is changed from a first charging mode for charging with a constant charging current to a second charging mode for charging with a constant charging voltage, the power supply circuit is arranged to:
measure a circuit resistance value from the power supply circuit to the battery based on a charging voltage to the battery, the cell voltage, and the charging current;
determine a voltage dropped from the charging voltage due to the circuit resistance value and the detection current to be the second detection voltage; and
change the predetermined detection voltage to the first detection voltage when determining that the charged state is not fully charged even after a charging time to the battery exceeds a predetermined reference charging time.

2. The power supply circuit according to claim 1 including the battery.

3. An electronic apparatus comprising the power supply circuit according to any preceding claim.

4. A control method for a power supply circuit (33), comprising:
supplying, to a system, system power required for the system out of DC power supplied from a power supply;
charging a battery (34) with charging power as remaining power;
determining (S106) that a charged state of the battery is fully charged when a cell voltage of the battery is a predetermined detection voltage or more (S102) and a charging current of the charging power becomes a predetermined detection current or less (S104);
estimating, as a second detection voltage, the cell voltage at a time when determining that the charged state is fully charged based on the cell voltage obtained in a specific charging state to the battery;
updating the predetermined detection voltage from a predetermined first detection voltage to the second detection voltage;
determining the cell voltage at the time when determining that the charged state is fully charged to be the second detection voltage when charging the battery with the charging power without supplying the system power to the system;
changing a charging method for the battery from a first charging mode for charging with a constant charging current to a second charging mode for charging with a constant charging voltage;
measuring a circuit resistance value from the power supply circuit to the battery based on a charging voltage to the battery, the cell voltage, and the charging current;
determining a voltage dropped from the charging voltage due to the circuit resistance value and the detection current to be the second detection voltage; and
changing the predetermined detection voltage to the first detection voltage when determining that the charged state is not fully charged even after a charging time to the battery exceeds a predetermined reference charging time.

## Patentansprüche

1. Stromversorgungsschaltung (33), die zu Folgendem angeordnet ist:
Versorgen eines Systems mit der für das System erforderlichen Systemleistung aus Gleichstrom, der von einer Stromversorgung geliefert wird;
Laden einer Batterie (34) mit Ladeleistung als Restleistung;
Bestimmen, dass ein Ladezustand der Batterie vollständig geladen ist, wenn eine Zellspannung der Batterie eine vorbestimmte Erfassungsspannung oder mehr ist und ein Ladestrom der Ladeleistung ein vorbestimmter Erfassungsstrom oder weniger wird;
Schätzen, als eine zweite Erfassungsspannung, der Zellspannung zu einem Zeitpunkt, zu dem bestimmt wird, dass der Ladezustand vollständig geladen ist, basierend auf der Zellspannung, die in einem bestimmten Ladezustand für die Batterie erhalten wird; und
Aktualisieren der vorbestimmten Erfassungsspannung von einer vorbestimmten ersten Erfassungsspannung auf die zweite Erfassungsspannung; und
Bestimmen der Zellspannung zu dem Zeitpunkt, zu dem bestimmt wird, dass der Ladezustand vollständig geladen ist, als die zweite Erfassungsspannung, wenn die Batterie mit der Ladeleistung geladen wird, ohne dass das System mit der Systemleistung versorgt wird,
wobei, wenn ein Ladeverfahren für die Batterie von einem ersten Lademodus zum Laden mit einem konstanten Ladestrom in einen zweiten Lademodus zum Laden mit einer konstanten Ladespannung geändert wird, die Stromversorgungsschaltung zu Folgendem angeordnet ist:
Messen eines Schaltungswiderstandswerts von dem Stromversorgungskreis zu der Batterie basierend auf einer Ladespannung zu der Batterie, der Zellspannung und dem Ladestrom;
Bestimmen einer Spannung, die aufgrund des Schaltungswiderstandswerts und des Erfassungsstroms von der Ladespannung abfällt, als die zweite Erfassungsspannung; und
Ändern der vorbestimmten Erfassungsspannung auf die erste Erfassungsspannung, wenn bestimmt wird, dass der Ladezustand nicht vollständig geladen ist, selbst wenn eine Ladezeit für die Batterie eine vorbestimmte Referenzladezeit überschreitet.

2. Stromversorgungsschaltung nach Anspruch 1, beinhaltend die Batterie.

3. Elektronische Vorrichtung, umfassend die Stromversorgungsschaltung nach einem der vorhergehenden Ansprüche.

4. Steuerungsverfahren für eine Stromversorgungsschaltung (33), Folgendes umfassend:
Versorgen eines Systems mit der für das System erforderlichen Systemleistung aus Gleichstrom, der von einer Stromversorgung geliefert wird;
Laden einer Batterie (34) mit Ladeleistung als Restleistung;
Bestimmen (S106), dass ein Ladezustand der Batterie vollständig geladen ist, wenn eine Zellspannung der Batterie eine vorbestimmte Erfassungsspannung oder mehr (S102) ist und ein Ladestrom der Ladeleistung ein vorbestimmter Erfassungsstrom oder weniger (S104) wird;
Schätzen, als eine zweite Erfassungsspannung, der Zellspannung zu einem Zeitpunkt, zu dem bestimmt wird, dass der Ladezustand vollständig geladen ist, basierend auf der Zellspannung, die in einem bestimmten Ladezustand für die Batterie erhalten wird;
Aktualisieren der vorbestimmten Erfassungsspannung von einer vorbestimmten ersten Erfassungsspannung auf die zweite Erfassungsspannung;
Bestimmen der Zellspannung zu dem Zeitpunkt, zu dem bestimmt wird, dass der Ladezustand vollständig geladen ist, als die zweite Erfassungsspannung, wenn die Batterie mit der Ladeleistung geladen wird, ohne dass das System mit der Systemleistung versorgt wird;
Ändern eines Ladeverfahrens für die Batterie von einem ersten Lademodus zum Laden mit konstantem Ladestrom in einen zweiten Lademodus zum Laden mit konstanter Ladespannung;
Messen eines Schaltungswiderstandswerts von dem Stromversorgungskreis zu der Batterie basierend auf einer Ladespannung zu der Batterie, der Zellspannung und dem Ladestrom;
Bestimmen einer Spannung, die aufgrund des Schaltungswiderstandswerts und des Erfassungsstroms von der Ladespannung abfällt, als die zweite Erfassungsspannung; und
Ändern der vorbestimmten Erfassungsspannung auf die erste Erfassungsspannung, wenn bestimmt wird, dass der Ladezustand nicht vollständig geladen ist, selbst wenn eine Ladezeit für die Batterie eine vorbestimmte Referenzladezeit überschreitet.

## Revendications

1. Circuit d'alimentation électrique (33) agencé pour :
fournir, à un système, de la puissance de système requise pour le système à partir de puissance CC fournie depuis une alimentation électrique ;
charger une batterie (34) avec de la puissance de charge en tant que puissance restante ;
déterminer qu'un état chargé de la batterie est entièrement chargé lorsqu'une tension de cellule de la batterie est une tension de détection prédéterminée ou plus et qu'un courant de charge de la puissance de charge devient un courant de détection prédéterminé ou moins ;
estimer, en tant que seconde tension de détection, la tension de cellule à un moment où il est déterminé que l'état chargé est entièrement chargé sur la base de la tension de cellule obtenue dans un état de charge spécifique de la batterie ; et
mettre à jour la tension de détection prédéterminée d'une première tension de détection prédéterminée à la seconde tension de détection ; et
déterminer la tension de cellule au moment de la détermination du fait que l'état chargé est entièrement chargé pour être la seconde tension de détection lors de la charge de la batterie avec la puissance de charge sans fournir de puissance de système au système,
dans lequel, lorsqu'un procédé de charge pour la batterie est passé d'un premier mode de charge pour charger avec un courant de charge constant à un second mode de charge pour charger avec une tension de charge constante, le circuit d'alimentation électrique est agencé pour :
mesurer une valeur de résistance de circuit du circuit d'alimentation électrique à la batterie sur la base d'une tension de charge de la batterie, la tension de cellule, et le courant de charge ;
déterminer une tension ayant chuté à partir de la tension de charge en raison de la valeur de résistance de circuit et du courant de détection pour être la seconde tension de détection ; et
faire passer la tension de détection prédéterminée à la première tension de détection lorsqu'il est déterminé que l'état chargé n'est pas entièrement chargé même après qu'une durée de charge de la batterie dépasse une durée de charge de référence prédéterminée.

2. Circuit d'alimentation électrique selon la revendication 1 incluant la batterie.

3. Appareil électronique comprenant le circuit d'alimentation électrique selon l'une quelconque des revendications précédentes.

4. Procédé de commande pour un circuit d'alimentation électrique (33), comprenant :
la fourniture, à un système, de puissance de système requise pour le système à partir de puissance CC fournie depuis une alimentation électrique ;
la charge d'une batterie (34) avec de la puissance de charge en tant que puissance restante ;
la détermination (S106) du fait qu'un état chargé de la batterie est entièrement chargé lorsqu'une tension de cellule de la batterie est une tension de détection prédéterminée ou plus (S102) et qu'un courant de charge de la puissance de charge devient un courant de détection prédéterminé ou moins (S104) ;
l'estimation, en tant que seconde tension de détection, de la tension de cellule à un moment où il est déterminé que l'état chargé est entièrement chargé sur la base de la tension de cellule obtenue dans un état de charge spécifique de la batterie ; et
la mise à jour de la tension de détection prédéterminée d'une première tension de détection prédéterminée à la seconde tension de détection ;
la détermination de la tension de cellule au moment de la détermination du fait que l'état chargé est entièrement chargé pour être la seconde tension de détection lors de la charge de la batterie avec la puissance de charge sans fournir la puissance de système au système ;
le fait de faire passer un procédé de charge pour la batterie d'un premier mode de charge pour charger avec un courant de charge constant à un second mode de charge pour charger avec une tension de charge constante ;
la mesure d'une valeur de résistance de circuit du circuit d'alimentation électrique à la batterie sur la base d'une tension de charge de la batterie, la tension de cellule, et le courant de charge ;
la détermination d'une tension ayant chuté à partir de la tension de charge en raison de la valeur de résistance de circuit et du courant de détection pour être la seconde tension de détection ; et
le fait de faire passer la tension de détection prédéterminée à la première tension de détection lorsqu'il est déterminé que l'état chargé n'est pas entièrement chargé même après qu'une durée de charge de la batterie dépasse une durée de charge de référence prédéterminée.
